Europäisches Patentamt

European Patent Office

Office européen des brevets

(11) Numéro de publication : **0 387 111 B1**

(12) **FASCICULE DE BREVET EUROPEEN**

(45) Date de publication du fascicule du brevet :
**12.05.93 Bulletin 93/19**

(51) Int. Cl.$^5$ : **C03B 23/023,** C03B 23/03,
C03B 23/035, C03B 40/02

(21) Numéro de dépôt : **90400316.7**

(22) Date de dépôt : **06.02.90**

(54) **Revêtement pour formes de bombage.**

(30) Priorité : **09.03.89 FR 8903077**

(43) Date de publication de la demande :
**12.09.90 Bulletin 90/37**

(45) Mention de la délivrance du brevet :
**12.05.93 Bulletin 93/19**

(84) Etats contractants désignés :
**BE CH DE ES FR GB IT LI LU SE**

(56) Documents cités :
**FR-A- 2 606 398**

(73) Titulaire : **SAINT-GOBAIN VITRAGE
INTERNATIONAL
"Les Miroirs" 18, avenue d'Alsace
F-92400 Courbevoie (FR)**

(72) Inventeur : **David, Roger
15, rue Jean de Breda, Le Plessis Brion
F-60150 Thourotte (FR)**
Inventeur : **Mathivat, Denis
7, avenue du Gros Buisson
F-60150 Thourotte (FR)**
Inventeur : **Petitcollin, Jean-Marc
12, rue de Verdun, Le Plessis Brion
F-60150 Thourotte (FR)**

(74) Mandataire : **Menes, Catherine et al
SAINT-GOBAIN RECHERCHE 39, Quai Lucien
Lefranc
F-93300 Aubervilliers (FR)**

## Description

L'invention a trait aux techniques de bombage de feuilles de verre et concerne plus spécialement un revêtement pour une forme de bombage pleine contre laquelle la feuille de verre est appliquée au cours du processus de bombage.

Dans les techniques de bombage les plus fréquemment utilisées, la feuille de verre - chauffée au delà de sa température de déformation - est appliquée au moins une fois au cours du processus de bombage contre une forme de bombage constituée par une plaque - réalisée dans une tôle ou une céramique réfractaire - qui présente éventuellement une forme plus ou moins proche de la forme définitive que l'on souhaite conférer à la feuille de verre. Cette forme de bombage est le plus souvent utilisée en association avec un cadre à profil courbe ouvert en son centre aussi est-elle par opposition désignée sous le terme de "forme de bombage pleine", même si le procédé de bombage ne comporte pas d'étape de pressage du verre entre cette forme de bombage pleine et le cadre ouvert en son centre.

A titre d'exemples non exhaustifs de telles formes de bombage pleines, citons des porteurs connus des brevets EP-3391 et EP-5306 constitués par des plaques réfractaires, planes ou présentant une petite courbure cylindrique, pourvues d'une pluralité d'orifices de succion au moyen desquels la feuille de verre - acheminée par un convoyeur, par exemple à rouleaux, jusqu'à une position d'arrêt sise exactement sous le porteur - est soulevée par aspiration jusqu'à venir en butée contre le porteur avant d'être laissée tomber sur un cadre de bombage où elle est bombée par effet de la gravité. En dehors de tels porteurs qui ne contribuent pas ou à peine au bombage même des feuilles de verre, il existe également des formes de bombage courbes contre lesquelles les feuilles de verre sont appliquées par des forces, par exemple de nature pneumatique ou mécanique, afin de déformer la feuille de verre conformément au galbe de la forme de bombage ; de telles formes sont connues des publications FR-2 085 464, FR-2 567 508, FR-2 596 750, FR-2 596 751, FR-2 601 668 ou EP 272 962. Enfin, on peut utiliser des formes de bombage pleines pour constituer des surfaces de pressage mécanique, pour un formage de feuilles de verre par pressage, en position verticale ou horizontale.

Quelque soit le rôle de la forme de bombage, sa surface de contact avec la feuille de verre est recouverte d'un revêtement intercalaire. Ce revêtement est destiné à adoucir le contact entre le verre et la forme supérieure dont il gomme notamment les petites imperfections qui peuvent subsister malgré l'usinage. De plus, même en supposant la forme de bombage parfaitement lisse, il faut encore tenir compte des poussières prises en sandwich entre le verre et la forme. Par ailleurs la différence de nature des matériaux (verre et acier réfractaire par exemple) suffit à entraîner la formation de piqure sur le verre chaud.

Le choix du revêtement subordonne la qualité optique des vitrages produits, notamment en raison du risque de la persistance d'une empreinte du revêtement sur la feuille de verre qui est très malléable au moment de son application contre la forme de bombage. Pour cette raison, la demanderesse a constaté qu'il est préférable de ne pas utiliser des tissus dont la trame pourrait être reconnue sur le verre. Par ailleurs, il va de soi que le revêtement utilisé doit être capable de supporter sans aucune dégradation une température voisine de façon permanente de 700°C et ceci pendant une durée compatible avec les exigences de rendement de la ligne de production de vitrages bombés, sachant que tout remplacement du revêtement de la forme de bombage nécessite l'interruption de la production pendant une durée qui peut aller jusqu'à plusieurs heures s'agissant de formes de bombage en céramiques réfractaires.

Un premier type de revêtement utilisé est du tissu en fibres de verre E, c'est-à-dire dans un verre non alcalin. Mais la limite de température d'utilisation d'un tel matériau est très proche de la température d'une feuille de verre dans une chambre de bombage, aussi un tel tissu se dégrade rapidement par oxydation. De plus, on peut retrouver l'empreinte de la trame du tissu visible sur le vitrage dont la qualité optique est alors fortement affectée.

Pour y remédier, il est connu de la demande de brevet JP-A-61 261 226 d'utiliser pour un équipement de pressage une étoffe faite principalement de fils d'acier inoxydable qui présentent une résistance à la chaleur supérieure à celle du verre E, de sorte que la durée d'utilisation d'un tel revêtement est d'environ 3 fois supérieure à celle d'un revêtement en tissu de fibres de verre. Mais si l'emploi de fils d'acier inoxydable résout les problèmes de résistance thermique du matériau, le revêtement reste un simple tissu et par ailleurs il ne donne pas entière satisfaction à l'égard des surfaces de verre émaillées.

Ce dernier problème se retrouve pleinement avec le troisième type de revêtement utilisé, du papier à base de fibres céramiques notamment de fibres de silice et/ou d'alumine agglomérées par un liant minéral. Les fibres céramiques ont en effet une très bonne résistance à la chaleur et de plus, la texture non tissée du papier évite tout marquage du verre. Ce revêtement papier très largement utilisé présente toutefois un certain nombre d'inconvénients. Tout d'abord , on doit utiliser des épaisseurs de l'ordre de 1 à 2 mm si on veut une résistance mécanique suffisante, avec comme corollaire, une raideur du papier qui convient mal aux formes de bombage les plus complexes. De plus, le papier doit obligatoirement être collé contre la forme de bombage. Si l'application de la colle n'est pas effectuée avec le soin requis, il se forme de petits grumeaux qui créent des boursouflures dont l'empreinte est visible sur le verre. D'autre part, la porosité du papier permet à la colle de migrer par endroits jusqu'en surface du papier et à nouveau on observe un marquage du verre.

Il est vrai que les défauts précités peuvent dans une large mesure être évités par une bonne application de la colle, mais cela constitue tout de même un handicap pour l'amélioration de la productivité de la ligne de fabrication, sachant que le papier peut être remplacé plusieurs fois par jour.

Par ailleurs, la fréquence de ces changements de papier est considérablement accrue si la surface du verre est partiellement couverte d'une composition d'émaillage. En effet, ces compositions d'émaillage sont appliquées sous forme de pâtes à l'entrée du four destiné à échauffer les feuilles de verre à la température de bombage et/ou de trempe, et naturellement sur la face supérieure de la feuille de verre, c'est-à-dire sur la face qui n'entre pas en contact avec le convoyeur, généralement à rouleaux, acheminant le verre au travers du four. Or dans tous les procédés de formage mentionnés ci-dessus, c'est la face supérieure donc émaillée de la feuille de verre qui est appliquée contre la forme de bombage.

Suivant les compositions d'émaillage utilisées, les émaux - dont la cuisson peut ne pas être totalement achevée lorsque la feuille de verre pénètre dans la station de bombage où se situe la forme de bombage - présentent un pouvoir collant plus ou moins grand. Lorsqu'un tel collage se produit, la feuille de verre entraîne en se décollant un lambeau de papier qui nécessite le remplacement rapide de celui-ci.

Il est par ailleurs connu de la demande de brevet FR-A-2 606 398 de revêtir une forme de bombage au moyen d'une couche dont la surface extérieure est constituée d'un treillis de fils métalliques tricotés. Le choix d'un tricotage plutôt que d'un tissage s'explique par la plus grande flexibilité de la couche protectrice ce qui permet d'épouser les formes complexes. Toutefois, la surface de contact avec le verre est composée de fils et non de fibres - avec des diamètres environ 100 fois supérieurs - de sorte que l'on accroît fortement le risque d'empreintes sur le verre chaud. Par ailleurs, lorsque la forme de bombage n'est pas fabriquée en céramique (or les formes de bombage métalliques sont souvent préférées car elles sont moins onéreuses et de plus elles se prêtent beaucoup plus simplement aux nombreux changements d'outillage), il est préconisé de doubler la couche constituée par le treillis métallique par une seconde couche à base de papier réfractaire qui ramène aux problèmes évoqués précédemment.

Il faut également noter que pour réaliser des vitrages de formes complexes, il est le plus souvent nécessaire d'opérer un pressage mécanique. Le revêtement subit alors une pression d'écrasement bien plus grande que lorsque le verre est simplement plaqué contre la forme de bombage par des forces de nature pneumatique, et on constate que des revêtements du type papier en fibres céramiques peuvent se détériorer de façon extrêmement rapide avec un pressage mécanique alors qu'il donne satisfaction lorsqu'il s'utilise sans pressage.

Le problème technique auquel s'efforce de répondre l'invention est celui de la fourniture d'un nouveau revêtement pour formes de bombage qui permette d'espacer de façon très significative les remplacements de revêtement, sans bien sûr nuire à la qualité des vitrages produits, notamment du point de vue de leur qualité optique.

Ce problème est résolu selon l'invention par l'utilisation d'un revêtement en fibres réfractaires dont la texture autorise l'arrachage une à une desdites fibres réfractaires et qui ne contienne pas de liant. Conformément à la revendication 1, l'invention propose pour cela un revêtement en fibres réfractaires pour formes de bombage pleines contre lesquelles on applique au cours du processus de bombage des feuilles de verre chauffées au-delà de leur température de déformation, lesdites fibres réfractaires étant réunies sans liant, avec des fibres métalliques d'un diamètre compris entre 8 et 16 microns et de préférence voisin de 12 microns, le revêtement étant obtenu par feutrage ou par tricotage.

L'idée sous-jacente à l'invention est donc totalement contraire à la pratique précédente où il s'agissait de fournir le revêtement le plus inusable possible, qui ne devait absolument pas se dégrader au cours de sa durée d'utilisation, mais dont l'usure lorsqu'elle se produisait entraînait immédiatement la nécessité d'un changement du revêtement.

Selon l'invention au contraire, une longévité exceptionnelle est paradoxalement due aux possibilités d'effritement du revêtement. Par effritement on entend ici la capacité d'arrachage de fibres unitaires car non liées par une matrice commune par exemple du type liant. De ce fait, le revêtement selon l'invention est beaucoup moins sensible que les revêtements connus aux phénomènes de collage par les émaux ; non que de tels phénomènes ne se produisent plus - ils sont en effet essentiellement dus à la nature des compositions d'émaillage - mais qu'ils deviennent pratiquement sans conséquence sur le revêtement car lorsque le verre se décolle du revêtement il emporte quelques fibres arrachées - et non des lambeaux entiers de revêtement comme c'est le cas par exemple avec des papiers à base de fibres céramiques. Le très petit nombre de fibres arrachées - et leur localisation sur les zones émaillées du vitrage - fait que l'effritement est absolument sans influence sur la qualité optique des vitrages et que l'usure consécutive du revêtement est de fait très faible. En pratique on a pu constaté des longévités environ 10 fois plus grande avec des revêtements selon l'invention - pour des mêmes types de volumes bien sûr. Par ailleurs, en autorisant cet arrachage, on évite que des gouttelettes d'émail ne viennent souiller le revêtement.

L'état de surface du revêtement doit être tel qu'il ne se produise aucun marquage du verre chauffé à sa température de bombage. Un tel état de surface peut être obtenu avec des matériaux non tissés tels des feutres ou des tricots. Lorsque des tricots sont utilisés, on choisit un mode de tricotage et une constitution des fils tricotés regroupant les fibres qui préservent la possibilité d'arrachage une à une des fibres et qui confèrent au produit un aspect proche d'un feutre. De bons résultats sont obtenus par exemple avec un tricotage de type Jersey avec une maille de l'ordre de 1 mm, de préférence à partir d'un fil "poilu", c'est-à-dire dont certaines de fibres ne sont tenues au fil que par une de leur extrémité et sont donc plus facilement arrachables.

Outre cette possibilité d'arrachage unitaire des fibres constituant le revêtement de la forme de bombage, il est avantageux que les fibres aient également une liberté de mouvement dans le revêtement, ce qui est possible notamment avec un revêtement dont la porosité est supérieure à 95 %, sachant par ailleurs que des porosités inférieures à 90 % ne sont pas souhaitables, car il faut éviter la formation durable d'un matelas d'air entre la feuille de verre et la forme de bombage - sans exclure toutefois qu'un tel matelas d'air ne se forme par exemple au moment où la feuille de verre touche la forme de bombage, ceci afin d'amortir le choc. Dans ces conditions, la porosité d'un revêtement selon l'invention est de préférence comprise entre 95 et 98 %. Notons par ailleurs qu'un revêtement qui présente une porosité élevée présente une grande souplesse qui lui permet de s'adapter parfaitement à toute forme de bombage même lorsque celle-ci a une ou plusieurs courbures marquées, présentes notamment à proximité des bords comme c'est le cas pour les vitrages de formes complexes.

Le grammage du revêtement est de préférence compris entre 300 et 900 g/m². Ceci permet d'obtenir des revêtements particulièrement résistants du point de vue mécanique qui peuvent éventuellement être fixés à la forme de bombage sans utiliser de colles, ce qui est totalement exclu pour les revêtements du type papier en fibres céramiques trop fragiles. Or comme indiqué au préambule de la demande, l'encollage est toujours une étape assez délicate car il faut veiller à ce qu'il ne se forme pas de grumeaux qui créent de petites boursouflures et favorisent la migration de points de colle à la surface du revêtement où ils viennent souiller les vitrages. En l'absence de colles, la fixation est obtenue par des moyens mécaniques, par exemple du type pinces. Notons que ce type de montage à l'arrière de la forme de bombage impose plusieurs pliures au revêtement que ne peuvent supporter par exemple les revêtements papiers, mais que supportent sans difficulté les revêtements selon l'invention au prix insignifiant du point de vue de leur usure et de la qualité optique de l'arrachage de quelques fibres.

Les fibres utilisées se doivent d'être suffisamment fines - il n'est pas bien sûr souhaitable que les fibres elles-mêmes laissent leur propre empreinte à la surface du verre et tout de même suffisamment résistantes - et par ailleurs d'un coût raisonnable. De bons résultats sont obtenus avec des fibres dont le diamètre moyen est inférieur à 16 microns et est par exemple compris entre 8 et 16 microns et est de préférence voisin de 12 microns.

Conviennent particulièrement à la réalisation d'un revêtement selon l'invention, des fibres à base d'alliage métallique réfractaire, par exemple un alliage réfractaire au nickel du type INCONEL 601 ou un acier inoxydable du type 316 L.

La durée d'utilisation des revêtements selon l'invention est au moins 10 fois supérieure à la durée d'utilisation des revêtements connus, du moins à chaque fois que la feuille de verre comporte sur sa face en contact avec le revêtement une partie émaillée.

Des essais ont été réalisés avec des feutres ou tricots selon l'invention et différents types d'intercalaire connus de l'art ou utilisé dans des domaines techniques très voisins comme la trempe de feuille de verre. Les caractéristiques des intercalaires sont les suivantes :

**INTERCALAIRE N° 1 :**

papier en fibres céramiques

**INTERCALAIRE N° 2 :**

tissu en fibres de verre E

**INTERCALAIRE N° 3 :**

tissu indéformable essentiellement métallique formé de mêches de brins de 90 fils élémentaires de 10 microns, disposées dans des directions différentes réalisant ensemble des mailles carrées de 2 à 10 mm de côté, et interférant pour former des noeuds aux sommets.

**INTERCALAIRE N° 4 :**

tissu amiante fin

**INTERCALAIRE N° 5 :**

tissu en fibres de silice

**INTERCALAIRE N° 6 :**

tissu métallique multiplex inox 304 L

**INTERCALAIRE N° 7 :**

- feutre selon l'invention
- alliage         : inox 316-L
- diamètre des fibres         : 8 microns
- grammage         : 500 g/m$^2$
- porosité         : 98 %

**INTERCALAIRE N° 8 :**

- feutre selon l'invention
- alliage         : inconel 601
- diamètre des fibres         : 12 microns
- grammage         : 600 g/m$^2$
- porosité         : 95 %

**INTERCALAIRE N° 9 :**

- feutre selon l'invention
- alliage         : inconel 601
- diamètre des fibres         : 12 microns
- grammage         : 300 g/m$^2$
- porosité         : 95 %

**INTERCALAIRE N° 10 :**

- feutre selon l'invention
- alliage         : inconel 601
- diamètre des fibres         : 8 microns
- grammage         : 600 g/m$^2$
- porosité         : 98 %

**INTERCALAIRE N° 11 :**

- feutre selon l'invention
- alliage         : inconel 601
- diamètre des fibres         : 12 microns
- grammage         : 600 g/m$^2$
- porosité         : 98 %

**INTERCALAIRE N° 12 :**

- tricot,
- alliage         : inox 316 L

- diamètre des fibres : 12 microns
- tricotage Jersey avec 112 fils par brins,
- distance entre deux rangées : 1,4 mm
- épaisseur du tricot : 0,7 mm

Le tableau ci-après montre les durées de vie respectives des différents intercalaires ; seuls les intercalaires conduisant à une qualité optique suffisante ayant été totalement testés. La supériorité des intercalaires selon l'invention est manifeste.

| Inter-calaire | fixation | qualité optique | durée de vie |
|---|---|---|---|
| 1 | collé | bien | 80 volumes |
| 1 | tendu sur forme | marquage | - |
| 2 | tendu sur papier | marquage | - |
| 2 | tendu sur forme | marquage | - |
| 3 | tendu sur papier | marquage | - |
| 4 | tendu sur papier | marquage | - |
| 5 | tendu sur papier | marquage | - |
| 6 | tendu sur papier | piqures | - |
| 7 | collé sur forme | bien | 180 volumes |
| 8 | tendu sur forme | bien | > 1000 |
| 8 | collé sur forme | bien | > 2000 |
| 9 | tendu sur papier | bien | 200 volumes |
| 9 | tendu sur forme | piqures | - |
| 10 | tendu sur forme | bien | 130 volumes |
| 11 | tendu sur forme | bien | 130 volumes |
| 12 | tendu sur papier | bien | > 1500 |

**Revendications**

1. Revêtement en fibres réfractaires pour formes de bombage pleines contre lesquelles on applique au cours du processus de bombage des feuilles de verre chauffées au-delà de leur température de déformation, lesdites fibres réfractaires étant réunies sans liant, **caractérisé en ce que** les fibres utilisées sont des fibres en alliage métallique réfractaire dont le diamètre est compris entre 8 et 16 microns et de préférence voisin de 12 microns **et en ce que** le revêtement est obtenu par tricotage ou feutrage.

2. Revêtement en fibres réfractaires du type tricot selon la revendication 1, **caractérisé en ce qu**'il présente des mailles de l'ordre de 1 à 1,4 mm.

3. Revêtement en fibres réfractaires selon la revendication 1, **caractérisé en ce que** le revêtement est obtenu par tricotage du type Jersey.

4. Revêtement en fibres réfractaires selon l'une des revendications précédentes, **caractérisé en ce que** le revêtement à un grammage compris entre 300 et 800 g.

5. Revêtement en fibres réfractaires selon l'une des revendications précédentes, **caractérisé** par une porosité comprise entre 90 et 98 %.

6. Revêtement en fibres réfractaires selon l'une des revendications précédentes, **caractérisé** par une porosité comprise entre 95 et 98 %.

7. Revêtement selon l'une des revendications précédentes, **caractérisé en ce que** les fibres sont sous forme de fils poilus.

8. Forme de bombage couverte par un revêtement conforme à l'une ou plusieurs des revendications 1 à 7.

9. Forme de bombage selon la revendication 8, **caractérisée en ce que** le revêtement est fixé par des moyens mécaniques montés à l'arrière de la forme de bombage.

10. Application du revêtement selon l'une des revendications 1 à 7 au bombage de feuilles de verre émaillées.


**Patentansprüche**

1. Beschichtung aus feuerfesten Fasern für volle Biegeformen, an die während des Biegeverfahrens auf über ihre Verformungstemperatur erhitzte Glasscheiben angelegt werden, wobei diese feuerfesten Fasern ohne Bindemittel miteinander verbunden sind, **dadurch gekennzeichnet,** daß die verwendeten Fasern aus einer feuerfesten Metallegierung bestehende Fasern sind, deren Durchmesser zwischen 8 und 16 und vorzugsweise etwa 12 Mikrometer beträgt, und daß die Beschichtung durch Maschen- oder Filzbildung hergestellt wird.

2. Beschichtung aus feuerfesten Fasern vom Typ einer Maschenware nach Anspruch 1, **dadurch gekennzeichnet,** daß sie Maschenweiten in der Größenordnung von 1 bis 1,4 mm aufweist.

3. Beschichtung aus feuerfesten Fasern nach Anspruch 1, **dadurch gekennzeichnet,** daß diese Beschichtung durch Jersey-Strickerei hergestellt wird.

4. Beschichtung aus feuerfesten Fasern nach einem der vorhergehenden Ansprüche, **dadurch gekennzeichnet**, daß die Beschichtung ein Flächengewicht zwischen 300 und 800 g aufweist.

5. Beschichtung aus feuerfesten Fasern nach einem der vorhergehenden Ansprüche, **dadurch gekennzeichnet,** daß sie eine Porigkeit zwischen 90 und 98 % aufweist.

6. Beschichtung aus feuerfesten Fasern nach einem der vorhergehenden Ansprüche, **dadurch gekennzeichnet**, daß sie eine Porigkeit zwischen 95 und 98 % aufweist.

7. Beschichtung nach einem der vorhergehenden Ansprüche, **dadurch gekennzeichnet**, daß die Fasern in Form von haarigen Fäden vorliegen.

8. Biegeform, die mit einer Beschichtung nach einem oder mehreren der Ansprüche 1 bis 7 versehen ist.

9. Biegeform nach Anspruch 8, **dadurch gekennzeichnet**, daß die Beschichtung durch mechanische Mittel, die an der Rückseite der Biegeform angebracht sind, befestigt wird.

10. Anwendung der Beschichtung nach einem der Ansprüche 1 bis 7 auf das Biegen von emaillierten Glasscheiben.


**Claims**

1. Covering of refractory fibres for solid bending moulds, against which glass sheets heated to above their deformation temperature are applied during the course of the bending process, said refractory fibres being connected together without binder, characterized in that the fibres used are fibres of refractory metal alloy, the diameter of which is from 8 to 16 microns and preferably in the region of 12 microns, and in that the covering is obtained by knitting or felting.

2. Covering of refractory fibres of the knitted type according to Claim 1, characterized in that it has stitches of the order of 1 to 1.4 mm.

3. Covering of refractory fibres according to Claim 1, characterized in that the covering is produced by knitting of the Jersey type.

4. Covering of refractory fibres according to one of the preceding Claims, characterized in that the covering has a weight per unit area of from 300 to 800 g/m$^2$.

5. Covering of refractory fibres according to one of the preceding Claims, characterized by a porosity of from 90 to 98%.

6. Covering of refractory fibres according to one of the preceding Claims, characterized by a porosity of from 95 to 98%.

7. Covering according to one of the preceding Claims, characterized in that the fibres are in the form of hairy threads.

8. Bending mould covered with a covering in accordance with one or more of Claims 1 to 7.

9. Bending mould according to Claim 8, characterized in that the covering is fixed by mechanical means mounted behind the bending mould.

10. Application of the covering according to one of Claims 1 to 7 to the bending of enamelled glass sheets.